# EUROPÄISCHE PATENTSCHRIFT

(11) **EP 0 310 846 B1**
(45) Veröffentlichungstag und Bekanntmachung des Hinweises auf die Patenterteilung: **08.12.1993**
(21) Anmeldenummer: 88115295.3
(22) Anmeldetag: 17.09.1988
(51) Int. Cl.: C08G 16/02, C14C 3/20, C08G 8/00

(54) **Kondensationsprodukte des Bis-(4-hydroxyphenyl)-sulfons als Gerbereihilfsmittel, deren Herstellung und Verwendung bei der Gerbung von Leder**
Condensation products of bis-(4-hydroxyphenyl) sulfones used as aids in tanning, their preparation and their use for tanning leather
Produits de condensation de bis-(4-hydroxyphényl)-sulfones utilisables comme moyens de tannage, leur préparation et leur utilisation pour le tannage de cuir

(30) Priorität: 22.09.1987 DE 3731810
(43) Veröffentlichungstag der Anmeldung: 12.04.1989
(73) Patentinhaber: BASF Aktiengesellschaft, 67063 Ludwigshafen (DE)
(72) Erfinder: Fikentscher, Rolf, Dr., D-6700 Ludwigshafen (DE); Lach, Dietrich, Dr., D-6701 Friedelsheim (DE); Schaffer, Ortwin, Dr., D-6700 Ludwigshafen (DE); Streicher, Rolf, D-6520 Worms 1 (DE); Oftring, Alfred, Dr., D-6700 Ludwigshafen (DE)

(56) Entgegenhaltungen:
- EP-A- 0 008 032
- BE-A- 625 544
- DE-A- 89 979
- GB-A- 1 115 428
- GB-A- 1 314 183
- CHEMICAL ABSTRACTS, Band 79, Nr. 2, 16. Juli 1973, Seite 96, Zusammenfassung Nr. 6818a, Columbus, Ohio, US; S. MITEV et al.: "Synthetic tanning agent for white skins"

## Beschreibung

Die Erfindung betrifft ein Kondensationsprodukt aus Bis-(4-hydroxyphenyl)-sulfon, einem Aldehyd, Dialdehyd und/oder Glyoxylsäure und Aminoessigsäure oder einer am N-Atom substituierten Aminoessigsäure als Gerbereihilfsmittel, dessen Herstellung und dessen Verwendung bei der Gerbung von Leder, insbesondere in Kombination mit Aluminiumgerbstoffen.

Die Chromgerbung stellt eines der wichtigsten Gerbeverfahren dar. Es besteht jedoch ein zunehmendes Interesse an chromfreien mineralischen Gerbverfahren, beispielsweise wegen des Problems der Beseitigung chromhaltigen Abwassers oder der Beseitung chromhaltiger Falzspäne. Anstelle von Chromverbindungen bieten sich beispielsweise Aluminium-, Titan- oder Zirkonverbindungen in Form ihrer Salze an. Jedoch werden insbesondere bei der alleinigen Verwendung von Aluminiumverbindungen ungenügende Schrumpfungstemperaturen des erhaltenen Leders erreicht. In der Regel sind Schrumpfungstemperaturen von 90 möglichst um 100°C wünschenswert. Weiterhin ist meist eine relativ leichte Auswaschbarkeit von Aluminiumgerbstoffen, d. h. eine begrenzte Wasserbeständigkeit des Leders, nachteilig.

Im J. Amer. Leather Chem. Assoc. 76 (1981), Seiten 230 - 244, wird die Kombination von Mimosa-Extrakt mit Aluminiumverbindungen als Alternative zur Chromgerbung beschrieben. Nachteilig an diesem Gerbverfahren ist die durch Mimosa-Extrakt erhaltene Brauntönung des Leders sowie eine ungenügende Lichtechtheit der gegerbten Leder.

Kondensationsprodukte von Phenolen mit Formaldehyd oder anderen Aldehyden und Aminoverbindungen, wie Aminosäuren, sind dem Fachmann schon lange bekannt. Dieser Reaktionstyp geht beispielsweise aus dem DP 89 979 oder der Literaturstelle V.J. Temkina et al., Z. Org. Chim. 7, 327 (1971) hervor. Kondensationsprodukte von Bis-(4-hydroxyphenyl)-sulfon mit Aldehyden und Aminoessigsäure oder einer am N-Atom substituierten Aminoessigsäure sind bisher nicht bekannt oder als Gerbstoff verwendet worden.

Aufgabe der vorliegenden Erfindung ist es, einen Gerbstoff oder ein Gerbereihilfsmittel für ein chromfreies Gerbeverfahren zur Verfügung zu stellen, bei dem die Nachteile der mangelnden Lichtechtheiten und Braunfärbung der Mimosa-Aluminium-Gerbung vermieden werden.

Die Lösung der Aufgabe besteht in einem Kondensationsprodukt, erhältlich durch Umsetzung von Bis-(4-hydroxyphenyl)-sulfon mit einem gesättigten aliphatischen Monoaldehyd mit 1 bis 4 C-Atomen und/oder einem Dialdehyd der Formel

OHC-(CH₂)ₙ-CHO,

in der n eine ganze Zahl von 0 bis 4 bedeutet, und/oder mit Glyoxylsäure, ggfs. in Form eines Alkalisalzes, und mit gegebenenfalls am N-Atom substituierter Aminoessigsäure, gegebenenfalls in Form eines Alkali- oder Ammoniumsalzes, in Molverhältnissen Bis-(4-hydroxyphenyl)-sulfon :
Aldehyd, Dialdehyd und/oder Glyoxylsäure oder ihrem Alkalisalz :
gegebenenfalls substituierter Aminoessigsäure oder einem ihrer Salze von 1 : 0,5 - 4 Mol : 0,3 - 4 Mol, wobei die Molmenge an Aminoessigsäure oder -derivat kleiner oder gleich der Molmenge an Aldehyd, Dialdehyd und/oder Glyoxylsäure ist, in wäßriger oder wäßrig-alkoholischer Lösung als Gerbereihilfsmittel, dessen Herstellung, der Verwendung dieses Gerbereihilfsmittels zusammen mit chromfreien Mineralgerbstoffen und einem Verfahren zum Gerben von Leder in Kombination insbesondere mit Aluminiumgerbstoffen.

Die bevorzugten Molverhältnisse von Bis-(4-hydroxyphenyl)-sulfon :
Aldehyd, Dialdehyd und/oder Glyoxylsäure : gegebenenfalls substituierter Aminoessigsäure oder ihrem Salz liegen bei
1 : 0,8 - 2,5 Mol : 0,5 - 2 Mol.

Die besonders hervorzuhebenden Kondensationsprodukte werden erhalten aus Bis-(4-hydroxyphenyl)-sulfon, Formaldehyd oder Glyoxal und Iminodiessigsäure oder ihren Alkali- oder Ammoniumsalzen.

Die Verwendung der erfindungsgemäßen Kondensationsprodukte als Gerbereihilfsmittel führt zu einem Leder von hohen Schrumpfungstemperaturen von 90 - 96°C. Die Farbe des Leders ist gegenüber dem bekannten braunen Leder der Mimosa-Aluminium-Gerbung elfenbeinfarbig bis weiß. Das Leder weist eine sehr gute Lichtechtheit auf. Ein weiterer Vorteil ist, daß die helle Eigenfarbe auch bei längerer Lagerung bei höheren Temperaturen von beispielsweise 60 - 80°C unverändert bleibt.

Die erfindungsgemäßen Kondensationsprodukte werden erhalten durch Umsetzung von Bis-(4-hydroxyphenyl)-sulfon mit einem gesättigten aliphatischen Monoaldehyd mit 1 bis 4 C-Atome, einem Dialdehyd der Formel

OHC-(CH₂)ₙ-CHO,

in der n eine ganze Zahl von 0 bis 4 bedeutet oder von Glyoxylsäure, ggfs. in Form eines Alkalisalzes, und gegebenenfalls am N-Atom substituierter Aminoessigsäure, gegebenenfalls in Form eines Alkali- oder Ammoniumsalzes, in Molverhältnissen von Bis-(4-hydroxyphenyl)-sulfon : Monoaldehyd, Dialdehyd und/oder Glyoxylsäure oder ihrem Alkalisalz : gegebenenfalls substituierte Aminoessigsäure oder ihrem Salz von 1 : 0,5 - 4 : 0,3 - 4, wobei die Molmenge an Aminoessigsäure oder -derivat kleiner oder gleich der Molmenge an Aldehyd, Dialdehyd und/oder Glyoxylsäure ist, in wäßriger oder wäßrig-alkolischer Lösung gegebenenfalls in einem geschlossenen System bei Temperaturen von 20 - 200°C und bei einem pH-Wert von 3 - 12.

Bevorzugte Kondensationsprodukte werden erhalten, wenn man pro Mol Bis-(4-hydroxyphenyl)-sulfon 0,8 - 2,5 Mol Aldehyd, Dialdehyd oder Glyoxylsäure und 0,5 - 2 Mol Aminoessigsäure oder -derivate einsetzt, wobei die Molmenge an Aminoessigsäure oder -derivat stets kleiner oder gleich der Molmenge an Aldehyd, Dialdehyd oder Glyoxylsäure ist, bei Temperaturen von 50 - 100°C unter Normaldruck und bei einem pH-Wert von 4 - 8 umsetzt.

Als aliphatische Monoaldehyde und Dialdehyde sind beispielsweise Formaldehyd, Acetaldehyd, Propionaldehyd, n-Butyraldehyd, iso-Butyraldehyd, Glyoxal, Malondialdehyd, Succindialdehyd, Glutardialdehyd oder Adipinaldehyd zu nennen. Sie werden bevorzugt in Form einer wäßrigen Lösung eingesetzt. Daneben ist auch der Einsatz ihrer Acetale, offenkettigen oder cyclischen, oder auch von Polymerenformen, wie z. B. Paraformaldehyd, möglich. Die bevorzugten Aldehyde sind der Formaldehyd, insbesondere in Form seiner ca. 30 gew.%igen wäßrigen Lösung, und Glyoxal in Form der üblichen ca. 40 gew.%igen wäßrigen Lösung.

Die Glyoxylsäure wird als übliche wäßrige Lösung oder als Alkalisalz, insbesondere als Natriumsalz der Glyoxylsäure, verwendet. Es können auch Mischungen von Glyoxylsäure und einem Alkalisalz verwendet werden.

Als am N-Atom substituierte Aminoessigsäure kommen Iminodiessigsäure, Ethanolaminoessigsäure, Glycin, Ethylendiamin-N,N-diessigsäure oder Sarkosin in Betracht, jeweils in der Säureform oder in der Form eines Alkali, insbesondere Natriumsalzes, oder Ammoniumsalzes. Es können auch Mischungen der Säure mit einem Salz eingesetzt werden. Als Aminoessigsäure wird bevorzugt die Iminodiessigsäure oder ein Alkali- oder Ammoniumsalz, insbesondere das Natriumsalz, eingesetzt.

Dementsprechend ist die Herstellung der Kondensationsprodukte aus Bis-(4-hydroxyphenyl)-sulfon, Formaldehyd oder Glyoxal und Iminodiessigsäure oder einem Salz besonders bevorzugt.

Die Ausgangsverbindungen können in beliebiger Reihenfolge zusammengegeben werden. Zweckmäßigerweise werden die drei Ausgangskomponenten in wäßriger Lösung vorgelegt und erhitzt. Dabei können ggfs. auch Gemische von den obengenannten Aldehydverbindungen oder Aminosäuren verwendet werden.

Das bevorzugte Reaktionsmedium ist Wasser. Es können aber auch wäßrig alkoholische Lösungen mit niederen, mit Wasser mischbaren Alkoholen, wie Methanol, Ethanol, n-Propanol, iso-Propanol oder mit Gemischen der genannten Alkohole verwendet werden, wobei in der Regel zum Gewicht des Wassers 10 - 50 Gew.% an Alkohol oder Alkoholgemisch zugegeben werden. Andere mit Wasser mischbare Lösungsmittel, die verwendet werden können, sind beispielsweise Dioxan oder Acetonitril.

Die Umsetzung erfolgt zweckmäßig bei einem pH-Wert-Bereich von 3 - 12, vorzugsweise von 4 - 8. Der gewünschte pH-Wert wird gegebenenfalls durch Zugabe einer Base oder Säure, vorzugsweise einer wäßrigen Lösung eines Alkalihydroxyds oder einer Mineralsäure, eingestellt.

Dabei sind Temperaturen von 50 bis 100°C unter Normaldruck bevorzugt. In der Regel erfolgt die Kondensation bei 80°C.

Die Kondensationsreaktion wird solange durchgeführt, d. h. das Reaktionsgemisch wird solange unter Rühren erhitzt, bis bei dem eingestellten pH-Wert und der vorliegenden Temperatur eine Änderung der Viskosität nicht mehr erfolgt und die Ausgangsverbindungen chromatographisch nicht mehr nachweisbar sind.

Bei den oben beschriebenen Kondensationsreaktionen werden in der Regel 10 - 80 gew.%ige, bevorzugt 30 - 60 gew.%ige, wäßrige Lösungen der Ausgangsstoffe unter Rühren umgesetzt. Die erhaltenen Lösungen, zweckmäßigerweise mit eingestellten Feststoffgehalten von 10 - 80 Gew.%, bevorzugt 30 - 60 Gew.%, können direkt der praktischen Verwendung zugeführt werden. Nach üblichem Verfahren, wie Abdestillieren des Lösungsmittels oder beispielsweise durch Sprühtrocknung, können die Kondensationsprodukte ohne Schwierigkeiten in Pulverform erhalten werden.

Weiterhin stellen die Kondensationsprodukte ein hervorragendes Gerbereihilfsmittel für die Gerbung von Leder zusammen mit chromfreien Mineralgerbstoffen, insbesondere mit Aluminiumgerbstoffen, dar.

Gegenstand der vorliegenden Erfindung ist auch die Verwendung der erfindungsgemäßen Kondensationsprodukte zum Gerben von Leder in wäßrigen Flotten, bei dem man die gepickelten Blößen mit einem Kondensationsprodukt aus Bis-(4-hydroxyphenyl)-sulfon, einem Monoaldehyd, Dialdehyd und/oder Glyoxylsäure oder ihrem Alkalisalz und gegebenenfalls am N-Atom substitutierter Aminoessigsäure, gegebenenfalls in Form eines Alkali- oder Ammoniumsalzes, wie es im vorhergehenden beschrieben und in den Ansprüchen definiert wird, in einer Menge von 4 - 20 Gew.%, bezogen auf das Blößengewicht, bei Temperaturen von 20 - 50°C und anschließend mit einer Aluminium-, Zirkon- oder Titanverbindung als mineralischen Gerbstoff in einer Menge von 4 - 16 Gew.%, bezogen auf das Blößengewicht, bei Temperaturen von 20 - 45°C behandelt, wobei die erste und zweite Stufe miteinander vertauscht sein können, sowie die Verwendung dieser Kondensationsprodukte, wie sie in den Ansprüchen definiert sind, als Gerbereihilfsmittel zusammen mit einer Aluminium-, Zirkon- oder Titanverbindung als mineralischen Gerbstoff.

Im folgenden wird hierzu näher erläutert: Ausgangsmaterial sind üblicherweise gepickelte Blößen, beispielsweise Rindsblößen mit Spaltstärken von 1,5 - 4 mm.

Die wäßrige Flotte des Pickelbades wird zweckmäßigerweise mit Flottenlängen von 30 - 200 %, bevorzugt 50 - 100 %, angewandt.

Die erfindungsgemäß verwendeten Kondensationsprodukte werden in üblicher Weise dem Pickelbad zugesetzt. Bei dem Gerbverfahren werden zweckmäßigerweise in der ersten Stufe pH-Werte von 2 - 5, bevorzugt 2,5 - 4,0 eingehalten. Die Einstellung des pH-Wertes kann durch Zusatz von beispielsweise Natriumbicarbonat erfolgen.

In der Regel wird das Kondensationsprodukt in zwei Anteilen zugegeben und es wird insgesamt 1 bis 18 Stunden gewalkt.

In der zweiten Stufe werden als mineralische Gerbstoffe insbesondere Aluminiumgerbstoffe, wie z. B. handelsübliches Aluminiumsulfat oder handelsübliches basisches Aluminiumchlorid beispielsweise mit einer Basizität von ca. 65 % und einem Aluminiumoxidgehalt von 22 - 23 % oder einer Basizität von ca. 20 % und einem Aluminiumoxidgehalt von 16 - 18 % verwendet.

Diese werden zweckmäßig in einer Menge von 4 - 16, bevorzugt 6 - 12 %, bezogen auf Blößengewicht, zugegeben.

Es wird bei Temperaturen von 20 - 45°C, bevorzugt 30 - 40°C, 1 - 18 Stunden, bevorzugt 4 - 14 Stunden, gewalkt.

Beim Einwalken der mineralischen Gerbstoffe sind pH-Werte zwischen 2,0 - 4,0, zweckmäßig. Am Ende der Einarbeitung des Mineralgerbstoffs wird der pH-Wert in der Regel durch Zusatz von Natriumformiat, Natriumacetat, Natriumbicarbonat oder Magnesiumoxid auf 4,5 - 6, bevorzugt 4,5 - 5,5, eingestellt.

Bei der Verwendung von Zirkonsalzen werden in der Regel pH-Werte von nicht höher als 2,5 eingehalten.

Wie oben erwähnt, können die beiden Gerbstufen in ihrer Reihenfolge vertauscht werden. Die Erfindung wird durch die folgenden Beispiele näher erläutert. Die in den Beispielen angegebenen Teile sind, soweit nicht anders angegeben, Gewichtsteile. Die Prozentangaben beziehen sich auf das Gewicht.

### Beispiele:

### Analytik:

30 %ige wäßrige Lösungen der Kondensationsprodukte erreichen in der Regel Viskositäten von 10 bis zu 500 mPa·s.

Die IR-Spektren enthalten charakteristische Banden zwischen
- 3450 und 2500 cm⁻¹: (OH-, COOH-, Amin-, aromatische und aliphatische C-H-Valenzschwingungen), sowie bei
- 1630 cm⁻¹: (COO^{⊖}-Valenzschwingung).

Unterhalb von 300°C ist kein definierter Schmelzpunkt festzustellen.

### Herstellungsbeispiele

### Beispiel 1

125 g (0,5 mol) Bis-(4-hydroxyphenyl)-sulfon, 100 g (1,0 mol) 30 %iger wäßriger Formaldehyd und 133 g (1,0 mol) Iminodiessigsäure werden gemischt und mit 300 g Wasser versetzt. Die resultierende Suspension werden anschließend auf 80°C erwärmt, und mit 25 %iger Natronlauge wird nun ein pH-Wert von 6,5 eingestellt. Nach 4-stündigem Rühren bei 80°C werden mittels HPLC sowie Aldehydtitration die Abwesenheit der Ausgangsmaterialien sowie keine Änderung der Viskosität mehr festgestellt. Man erhält nach dem Abdestillieren von leichtflüchtigen Anteilen in einem Vakuum von 30 mbar einen orange-farbenen amorphen Rückstand (249 g).

### Beispiel 2

125 g (0,5 mol) Bis-(4-hydroxyphenyl)-sulfon, 90 g (0,9 mol) 30 %iger Formaldehyd und 52,2 g (0,4 mol) Iminodiessigsäure werden mit 240 g Wasser vermischt. Die weitere Versuchsdurchführung erfolgt analog zu der unter Beispiel 1 beschriebenen. Es resultiert ein gelber amorpher Rückstand (195 g).

### Beispiel 3

Beispiel 2 wird analog wiederholt; wobei anstelle von Iminodiessigsäure ihr Di-natriumsalz in Form einer 30 %igen wäßrigen Lösung verwendet wird.

### Beispiel 4

Man löst 250 g (1,0 mol) Bis-(4-hydroxyphenyl)-sulfon in 250 g Ethanol und stellt mit 50 %iger Natronlauge einen pH-Wert von 5,0 ein. Zu dieser Lösung tropft man bei 80°C parallel eine 40 %ige wäßrige Lösung von 104,4 g (0,8 mol) Iminodiessigsäure, welche mit 50 %iger Natronlauge zuvor auf einen pH-Wert von 5,0 gesetzt wird, sowie 130 g (1,3 mol) einer 30 %igen Formaldehydlösung innerhalb von 3 Stunden zu. Anschließend wird noch 1 Stunde bei 80°C weitergerührt, wonach HPLC und Viskositätsmessung das Reaktionsende belegen. Nach Aufkonzentrieren der Lösung und Abdestillieren der Lösungsmittel unter vermindertem Druck verbleiben 351 g eines orange-farbenen Feststoffs.

### Beispiel 5

Die Durchführung erfolgt analog zu Beispiel 1 mit 125 g (0,5 mol) Bis-(4-hydroxyphenyl)-sulfon, 75 g (0,75 mol) 30 %igem Formaldehyd und 99,8 g (0,75 mol) Iminodiessigsäure bei einem pH-Wert von 6.

### Beispiel 6

Das Beispiel wird analog zu Beispiel 1 durchgeführt mit 125 g (0,5 mol) Bis-(4-hydroxyphenyl)-sulfon, 65 g (0,65 mol) 30 %igem Formaldehyd und 79,8 g (0,6 mol) Iminodiessigsäure bei einem pH-Wert von 6,5.

### Beispiel 7

Die Versuchsdurchführung erfolgt analog zu der in Beispiel 1 mit 125 g (0,5 mol) Bis-(4-hydroxyphenyl)-sulfon, 65 g (0,65 mol) 30 %igem Formaldehyd sowie 66,5 g (0,5 mol) Iminodiessigsäure bei einem pH-Wert von 6.

### Beispiel 8

Die Durchführung erfolgt analog zu der in Beispiel 1 mit 50 g (0,2 mol) Bis-(4-hydroxyphenyl)-sulfon, 30 g (0,4 mol) 30 %igem Formaldehyd sowie 21,3 g (0,16 mol) Iminodiessigsäure in 120 g Wasser bei einem pH-Wert von 5,5.

### Beispiel 9

125 g (0,5 mol) Bis-(4-hydroxyphenyl)-sulfon, 100 g (1,0 mol) 30 %iger wäßriger Formaldehyd und 133 g (1,0 mol) Iminodiessigsäure werden mit 250 g Wasser und 250 g Ethanol vermischt und mit 50 %iger wäßriger Natronlauge wird ein pH-Wert von 5,5 eingestellt. Man erhitzt 6,5 Stunden zum Sieden. Nach dem Abdestillieren der flüchtigen Anteile unter vermindertem Druck und Trocknen des Rückstands verbleiben 265 g gelbes Festprodukt.

### Beispiel 10

Beispiel 9 wird analog mit 125 g (0,5 mol) Bis-(4-hydroxyphenyl)-sulfon, 90 g (0,9 mol)30 %igem wäßrigem Formaldehyd und 53,2 g (0,4 mol) Iminodiessigsäure wiederholt. Es resultieren 189 g Kondensat.

### Beispiel 11

Beispiel 9 wird analog mit 125 g (0,5 mol) Bis-(4-hydroxyphenyl)-sulfon, 100 g (1,0 mol) 30 %igem wäßrigem Formaldehyd sowie 53,2 g (0,4 mol) Iminodiessigsäure wiederholt. Nach dem Aufkonzentrieren und Trocknen verbleiben 195 g Kondensationsprodukt.

### Beispiel 12

Die Versuchsdurchführung erfolgt analog zu Beispiel 9 mit 125 g (0,5 mol) Bis-(4-hydroxyphenyl)-sulfon, 65 g (0,65 mol) 30 %igem wäßrigem Formaldehyd und 53,2 g (0,4 mol) Iminodiessigsäure. Man erhält 185 g Kondensationsprodukt.

### Beispiel 13

108,8 g (0,75 mol) 40 %iges wäßriges Glyoxal und 53,2 g (0,4 mol) Iminodiessigsäure werden vorgelegt. Mit 50 %iger wäßriger Natronlauge wird ein pH-Wert von 6,5 eingestellt. Anschließend wird auf 80°C erwärmt und eine Lösung von 125 g (0,5 mol) Bis-(4-hydroxyphenyl)-sulfon in 250 g Ethanol innerhalb von 1 Stunde zugetropft.

Anschließend wird noch 5 Stunden bei 80°C gerührt. Hiernach wird mittels Aldehydbestimmung sowie chromatographisch die Abwesenheit der Ausgangsmaterialien und desweiteren keine Veränderung der Viskosität mehr festgestellt. Nach dem Entfernen der flüchtigen Anteile und Trocknen des Rückstandes im Vakuum werden 194 g Kondensationsprodukt erhalten.

### Beispiel 14

Die Versuchsdruchführung erfolgt analog zu Beispiel 13 mit 66,6 g (0,45 mol) 50 %iger wäßriger Glyoxylsäure anstelle von Glyoxal, 26,6 g (0,2 mol) Iminodiessigsäure und 62,5 g (0,25 mol) Bis-(4-hydroxyphenyl)-sulfon. Nach 10-stündiger Gesamtreaktionsdauer werden die flüchtigen Anteile abdestilliert und man erhält 115 g Kondensat.

### Beispiel 15

Beispiel 13 wird analog mit 36,3 g (0,25 mol) 40 %igem Glyoxal und 37 g (0,25 mol) 50 %iger wäßriger Glyoxylsäure anstelle von Glyoxal wiederholt. Nach 8-stündiger Gesamtreaktionsdauer wurden 195 g Kondensationsprodukt gewonnen.

### Anwendungsbeispiele

### Anwendungsbeispiel 1

100 Teile Rindsblöße (Spaltstärke 2,0 mm) werden in einem Pickelbad aus 60 Teilen Wasser, 6 Teilen Natriumchlorid, 0,6 Teilen Ameisensäure und 0,6 Teilen Schwefelsäure 60 Min. behandelt.

Bei Raumtemperatur gibt man zu diesem Pickelbad in 90-minütigem Abstand in zwei Anteilen eine Lösung von 10 Teilen des 100 %igen Kondensationsproduktes von Herstellungsbeispiel 3, welche bei pH-Wert 4,0 mit 90 Teilen Wasser verdünnt wurden, und walkt nochmals 90 Minuten.

Anschließend werden der Flotte 10 Teile eines handelsüblichen Aluminiumchloridgerbstoffes (Basizität 20 %; Al₂O₃-Gehalt 16 - 18 %) zugesetzt und über Nacht bewegt. Am anderen Morgen beträgt der pH-Wert der Flotte 2,1 bis 2,3. Man fügt 2 Teile Natriumacetat zu und walkt 60 Min. weiter.

Danach wird die Temperatur auf 40°C erhöht und durch portionsweise Zugabe von insgesamt 1,7 Teilen Magnesiumoxid der pH-Wert der Flotte im Verlauf von 6 Stunden auf 5,6 gestellt.

Die Leder werden über Nacht gelagert. Anschließend wird in 100 Teilen frischer Flotte gefettet, abgesäuert und fertiggestellt. Das Leder weist eine Schrumpftemperatur von 92°C auf, ist cremefarbig hell und sehr weich. Es zeichnet sich durch gute Lichtechtheit und Wärmeresistenz aus.

### Anwendungsbeispiel 2

Zu 100 Teilen gemäß Anwendungsbeispiel 1 gepickelter Rindsblöße in 60 Teilen Pickelflotte gibt man 10 Teile eines handelsüblichen Aluminiumchloridgerbstoffes (Basizität 20 %; Al₂O₃-Gehalt 16 - 18 %) und läßt 4 Stunden bei Raumtemperatur (25°C) einwalken. Danach setzt man im Abstand von 90 Min. in 2 Anteilen eine Lösung von 10 Teilen des 100 %igen Kondensationsproduktes von Herstellungsbeispiel 3, welches bei pH-Wert 4 mit 90 Teilen Wasser verdünnt wurde, zu und bewegt über Nacht. Man erhält am anderen Morgen einen pH-Wert von 2,2 in der Flotte. Mit 2 Teilen Natriumacetat stellt man auf pH 2,6 und walkt 60 Minuten. Anschließend wird mit 1,7 Teilen Magnesiumoxid im Verlauf von 6 Stunden auf pH 5,5 gestellt; man arbeitet dabei bei 40°C. Die Leder werden wie üblich fertiggestellt.

Sie weisen nach der Fettung eine Schrumpftemperatur von 92°C auf, sind weich und hell und zeigen gute Resistenz gegen Licht- und Wärmeeinwirkung.

### Anwendungsbeispiel 3

Verwendet man anstelle des in Herstellungsbeispiel 1 genannten Kondensationsproduktes gleiche Teile des Kondensationsproduktes von Herstellungsbeispiel 8, so erhält man ähnlich helle und weiche Leder. Sie weisen eine Schrumpftemperatur von 94°C auf. Die Leder zeichnen sich auch hier durch gute Lichtechtheit und Wärmeresistenz aus.

### Anwendungsbeispiel 4

Verwendet man anstelle der in Anwendungsbeispiel 1 genannten 1,7 Teile Magnesiumoxid nur 1,4 Teile, so erhält man einen End-pH-Wert von 4,7. Die Leder zeigen eine Schrumpftemperatur von 91°C, sind weich und hell. Sie weisen eine gute Lichtechtheit und Wärmeresistenz auf.

### Anwendungsbeispiel 5

Anstelle des in Anwendungsbeispiel 1 genannten Aluminiumgerbstoffes werden 8 Teile eines anderen handelsüblichen Aluminiumgerbstoffes (Basizität 65 %; Al₂O₃-Gehalt 22 - 23 %) verwendet.

Die damit gefertigten Leder weisen nach der Fettung eine Schrumpftemperatur von 92°C auf, sind hell und weich und zeigen gute Lichtechtheit und Wärmeresistenz.

### Anwendungsbeispiel 6

Verwendet man anstelle des in Anwendungsbeispiel 1 genannten Kondensationsproduktes von Herstellungsbeispiel 3 gleiche Teile des Kondensationsproduktes von Herstellungsbeispiel 2, so weisen die Leder nach der Fettung eine Schrumpftemperatur von 90°C auf. Sie zeichnen sich durch gute Lichtechtheit und Wärmeresistenz aus.

### Anwendungsbeispiel 7

Verwendet man anstelle der in Anwendungsbeispiel 1 genannten 1,7 Teile Magnesiumoxid im gleichen Zeitraum 6,2 Teile Natriumbicarbonat und arbeitet bei Raumtemperatur (25°C), so erhält man einen End-pH-Wert von 5,4. Die Leder weisen nach der Fettung eine Schrumpftemperatur von 90°C auf und zeigen eine gute Resistenz gegen Licht- und Wärmewirkung.

## Patentansprüche

1. Kondensationsprodukte, erhältlich durch Umsetzung von Bis-(4-hydroxvphenyl)-sulfon mit einem gesättigten aliphatischen Monoaldehyd mit 1 bis 4 C-Atomen und/oder einem Dialdehyd der Formel
OHC-(CH₂)ₙ-CHO,
in der n eine ganze Zahl von 0 bis 4 bedeutet, und/oder mit Glyoxylsäure, ggfs. in Form eines Alkalisalzes, und mit gegebenenfalls am N-Atom substituierter Aminoessigsäure, gegebenenfalls in Form eines Alkali- oder Ammoniumsalzes, in Molverhältnissen von Bis-(4-hydroxyphenyl)-sulfon : Aldehyd, Dialdehyd und/oder Glyoxylsäure oder ihrem Alkalisalz gegebenenfalls substituierte Essigsäure oder ihrem Salz von 1 0,5 - 4 : 0,3 - 4, wobei die Molmenge an Aminoessigsäure oder -derivat kleiner oder gleich der Molmenge an Aldehyd, Dialdehyd und/oder Glyoxylsäure ist, in wäßriger oder wäßrig-alkoholischer Lösung.

2. Kondensationsprodukte nach Anspruch 1, erhältlich durch Umsetzung in Molverhältnissen von Bis-(4-hydroxyphenyl)-sulfon : Aldehyd, Dialdehyd und/oder Glyoxylsäure : gegebenenfalls substituierter Aminoessigsäure oder einem Salz von 1 : 0,8 - 2,5 : 0,5 - 2.

3. Kondensationsprodukte nach Anspruch 1 oder 2, erhältlich durch Umsetzung von Bis-(4-hydroxyphenyl)-sulfon, Formaldehyd oder Glyoxal und Iminodiessigsäure oder deren Alkali- oder Ammoniumsalz.

4. Verfahren zur Herstellung von Kondensationsprodukten nach Anspruch 1, dadurch gekennzeichnet, daß man die in Anspruch 1 definierte Umsetzung in wäßriger oder wäßrigalkoholischer Lösung gegebenenfalls in einem geschlossenen System bei Temperaturen von 20 - 200°C und bei einem pH-Wert von 3 - 12 umsetzt.

5. Verwendung von wie in Anspruch 1 definierten Kondensationsprodukten bei der Gerbung von Leder in einem Zweistufenverfahren, wobei in der ersten Stufe eine Behandlung der gepickelten Blößen bei 20 - 50°C mit einer, bezogen auf das Blößengewicht, 4 - 20 gew.%igen wäßrigen Flotte des Kondensationsprodukts und in einer zweiten Stufe eine Behandlung bei 20 - 45°C mit 4 - 16 Gew.%, bezogen auf das Blößengewicht, einer Aluminium-, Zirkon- oder Titanverbindung als mineralischem Gerbstoff erfolgt, und wobei die erste und zweite Stufe miteinander vertauscht sein können.

## Claims

1. A condensate obtainable by reacting bis-(4-hydroxyphenyl) sulfone with a saturated aliphatic monoaldehyde of 1 to 4 carbon atoms, or a dialdehyde of the formula
OHC-(CH₂)ₙ-CHO
where n is an integer from 0 to 4, and/or with glyoxylic acid, if necessary in the form of an alkali metal salt, and with an unsubstituted or N-substituted aminoacetic acid, if necessary in the form of an alkali metal salt or ammonium salt, in a molar ratio of bis-(4-hydroxyphenyl) sulfone to aldehyde, dialdehyde and/or glyoxylic acid or its alkali metal salt to unsubstituted or substituted acetic acid or its salt of 1 : 0.5 - 4 : 0.3 - 4, the molar amount of aminoacetic acid or its derivative being less than or equal to the molar amount of aldehyde, dialdehyde and/or glyoxylic acid, in aqueous or aqueous-alcoholic solution.

2. A condensate as claimed in claim 1, obtainable by reacting bis-(4-hydroxyphenyl) sulfone with aldehyde, dialdehyde and/or glyoxylic acid and with an unsubstituted or substituted aminoacetic acid or a salt in a molar ratio of 1 : 0.8 - 2.5 : 0.5 - 2.

3. A condensate as claimed in claim 1 or 2, obtainable by reacting bis-(4-hydroxyphenyl) sulfone, formaldehyde or glyoxal and iminodiacetic acid or its alkali metal or ammonium salt.

4. A process for the preparation of a condensate as claimed in claim 1, wherein the reaction defined in claim 1 is carried out in aqueous or aqueous-alcoholic solution, if necessary in a closed system, at 20 - 200°C and at a pH of 3 - 12.

5. Use of a condensate defined as in claim 1 in the tanning of leather in a two-stage process, in which, in the first stage, the pickled pelts are treated at 20 - 50°C with an aqueous liquor of the condensate, which liquor is 4 - 20% strength by weight, based on the pelt weight, and, in a second stage, a treatment is carried out at 20 - 45°C with 4 - 16% strength by weight, based on the pelt weight, of an aluminum, zirconium or titanium compound as a mineral tanning agent, it being possible for the first and second stages to be interchanged with one another.

## Revendications

1. Produits de condensation pouvant être obtenus par reaction en solution aqueuse ou hydro-alcoolique de bis-(4-hydroxyphényl)sulfone avec un monoaldéhyde aliphatique saturé à 1 à 4 atomes de carbone et/ou un dialdéhyde de formule
OHC-(CH₂)ₙ-CHO,
dans laquelle n est un nombre entier de 0 à 4, et/ou avec de l'acide glyoxylique éventuellement sous forme d'un sel alcalin, et avec de l'acide aminoacétique éventuellement substitue sur l'atome d'azote, éventuellement sous forme d'un sel alcalin ou d'un sel d'ammonium, dans des rapports molaires de bis-(4-hydroxyphényl)sulfone : aldéliyde, dialdéhyde et/ou acide glyoxylique ou de leur sel alcalin : acide acétique éventuellement substitué ou son sel de 1 : 0,5 - 4 : 0,3 - 4, la quantité molaire en acide aminoacétique ou en son dérive étant inférieure ou égale à la quantité molaire d'aldéhyde, dialdéhyde et/ou acide glyoxylique.

2. Produits de condensation selon la revendication 1, pouvant être obtenus par réaction mettant en oeuvre des rapports molaires de bis-(4-hydroxyphényl)sulfone : aldéhyde, dialdéhyde et/ou acide glyoxylique : acide aminoacétique éventuellement substitué ou un sel de celui-ci, de 1 : 0,8 - 2,5 : 0,5 - 2.

3. Produits de condensation selon la revendication 1 ou 2, pouvant être obtenus par réaction de bis-(4-hydroxyphényl)sulfone, de formaldéhyde ou de glyoxal et d'acide iminodiacétique, d'un sel alcalin ou d'un sel d'ammonium de celui-ci.

4. Procédé de préparation de produits de condensation selon la revendication 1, caractérisé en ce que l'on effectue la réaction définie en revendication 1 en solution aqueuse ou hydro-alcoolique, éventuellement dans un système fermé à des températures de 20 à 200°C et une valeur de pH de 3 à 12.

5. Utilisation de produits de condensation tels que définis en revendication 1, dans le tannage du cuir, en un procédé à deux étapes, dans lequel on effectue dans une première étape un traitement des peaux planées picklées à 20 - 50°C avec un bain aqueux du produit de condensation à 4 - 20% en poids par rapport au poids des peaux et on effectue dans une seconde étape un traitement à 20 - 45°C avec 4 - 16% en poids par rapport au poids des peaux, d'un composé d'aluminium, de zirconium ou de titane en tant que matière de tannage minérale, et dans lequel la première et la seconde étapes peuvent être interverties.
